# EUROPÄISCHE PATENTANMELDUNG

(11) **EP 3 520 991 A1**
(43) Veröffentlichungstag der Anmeldung: **07.08.2019**
(21) Anmeldenummer: 19155682.8
(22) Anmeldetag: 06.02.2019
(51) Int. Cl.: B29C 49/32, B29C 49/42, B29L 31/00, B29K 67/00, B29C 49/08, B65B 3/02, B29C 49/56, B67C 3/26

(54) **VORRICHTUNG UND VERFAHREN ZUR HERSTELLUNG EINES MIT EINEM FÜLLPRODUKT BEFÜLLTEN BEHÄLTERS**

(30) Priorität: 06.02.2018 DE 102018102649
(71) Anmelder: KRONES AG, 93073 Neutraubling (DE)
(72) Erfinder: SENN, Konrad, 93073 Neutraubling (DE)
(74) Vertreter: Nordmeyer, Philipp Werner

(57) **Zusammenfassung**

Die vorliegende Erfindung betrifft eine Vorrichtung (1) zum Herstellen eines mit einem Füllprodukt befüllten Behälters (110), umfassend eine Blasform (2) zum Herstellen des zu befüllenden Behälters durch Blasformen eines Preforms in einer Blasvorrichtung (3), und eine Füllvorrichtung (4) zum Befüllen des blasgeformten und sich noch in der Blasform (2) befindlichen zu befüllenden Behälters mit dem Füllprodukt, wobei die Blasform (2) von der Blasvorrichtung (3) zu der Füllvorrichtung (4) verfahrbar ist.

## Beschreibung

### Technisches Gebiet

Die vorliegende Erfindung betrifft eine Vorrichtung sowie ein Verfahren zum Herstellen eines mit einem Füllprodukt befüllten Behälters, insbesondere eines in einem Blasprozess beziehungsweise Streckblasprozess hergestellten, mit einem Füllprodukt befüllten, Behälters in einer Getränkeabfüllanlage.

### Stand der Technik

Aus dem Stand der Technik ist es bekannt, mit einem Füllprodukt zu befüllende Behälter in Getränkeabfüllanlagen mittels eines Blasprozesses beziehungsweise eines Streckblasprozesses herzustellen. Hierbei werden so genannte Preforms aus Kunststoff, beispielsweise PET, erwärmt und dann in einer Blasform aufgenommen. Dann wird durch Einbringen eines unter Druck stehenden Blasmediums durch die Mündung des Preforms der Behälter in der Blasform in die gewünschte Form ausgeformt.

Um den Vorgang zu unterstützen, kann gleichzeitig mit dem Blasmedium oder vor dem Einbringen des Blasmediums durch die Mündung des Preforms eine Streckstange eingebracht werden, um ein mechanisches Vorstrecken oder Strecken des Materials des Preforms vor dem Blasvorgang oder während des Blasvorgangs zu ermöglichen. Auf diese Weise kann der Prozess des Herstellens des zu befüllenden Behälters weiter unterstützt werden.

Als Blasformen werden üblicherweise zweigeteilte oder mehrfach geteilte Kavitäten verwendet, welche so dimensioniert sind, dass sie dem Blasdruck standhalten können. Die Kavitäten sind üblicherweise gekühlt, um den Blasprozess schneller abschließen zu können und entsprechend das Entformen des fertig geblasenen, zu befüllenden Behälters schneller durchführen zu können, da das Kunststoffmaterial erst unterhalb einer bestimmten Temperatur die erforderliche Stabilität zum Entformen aufweist. Ein solcher Vorgang sowie die zugehörige Vorrichtung zum Streckblasen von Kunststoffbehältern sind beispielsweise aus der US 4,039,641 bekannt.

Es ist weiterhin bekannt, den mittels des Blasverfahrens beziehungsweise des Streckblasverfahrens hergestellten Behälter anschließend mit einem Füllprodukt zu befüllen. Hierzu schlägt die bereits genannte US 4,039,641 vor, ein Füllprodukt in den Innenraum des sich noch in der Blasform befindlichen, mit dem Blasmedium unter Druck beaufschlagten Behälters einzufüllen. Dabei werden beispielsweise karbonisierte Getränke, wie Bier etc., in den Innenraum des geblasenen Behälters eingefüllt. Nach dem Einfüllen der Flüssigkeit wird der dann fertig ausgeformte und mit dem Füllprodukt beaufschlagte Behälter aus der Blasform entformt und der weiteren Verarbeitung zugeführt.

### Darstellung der Erfindung

Ausgehend von dem bekannten Stand der Technik ist es eine Aufgabe der vorliegenden Erfindung, eine weiter verbesserte Vorrichtung sowie ein weiter verbessertes Verfahren zum Herstellen von mit einem Füllprodukt befüllten Behältern anzugeben.

Diese Aufgabe wird mittels einer Vorrichtung zum Befüllen eines Behälters mit einem Füllprodukt mit den Merkmalen des Anspruchs 1 gelöst. Vorteilhafte Weiterbildungen ergeben sich aus den Unteransprüchen.

Entsprechend wird eine Vorrichtung zum Herstellen eines mit einem Füllprodukt befüllten Behälters vorgeschlagen, wobei die Vorrichtung eine Blasform zum Herstellen des zu befüllenden Behälters durch Blasformen eines Preforms in einer Blasvorrichtung und eine Füllvorrichtung zum Befüllen des blasgeformten und sich noch in der Blasform befindlichen zu befüllenden Behälters mit dem Füllprodukt umfasst. Erfindungsgemäß ist die Blasform von der Blasvorrichtung zu der Füllvorrichtung verfahrbar.

Dadurch, dass die Blasform von der Blasvorrichtung zu der Füllvorrichtung verfahrbar ist, wird ein effizienteres Herstellen von befüllten Behältern ermöglicht. Insbesondere wird es auf diese Weise möglich, dass sowohl die Blasvorrichtung als auch die Füllvorrichtung besser ausgelastet werden können und entsprechend ein effizienterer Aufbau der gesamten Vorrichtung ermöglicht wird.

Aus dem Stand der Technik war es bekannt, den Blasvorgang und den Befüllvorgang nacheinander am gleichen relativen Ort durchzuführen und dann erst den fertig befüllten Behälter aus der Blasform zu entformen. Hierdurch musste während des Blasvorganges die Füllvorrichtung warten und während des Füllvorganges die Blasvorrichtung warten und es war an jeder Blaskavität eine Blasvorrichtung und eine Füllvorrichtung vorgesehen.

Durch die vorgeschlagene Vorrichtung, in welcher die Blasform relativ zu der Blasvorrichtung und der Füllvorrichtung verfahrbar ist, kann erreicht werden, dass ein fertig hergestellter, sich noch in der Blasform befindlicher Behälter mit der Blasform direkt zu der Füllvorrichtung gefahren wird und dann an der Füllvorrichtung mit dem Füllprodukt befüllt wird. Während des Befüllens eines ersten Behälters in der ersten Blasform durch die Füllvorrichtung kann gleichzeitig in einer zweiten Blasform an der Blasvorrichtung wieder ein Blasvorgang durchgeführt werden. Entsprechend kann durch die räumliche Trennung von Füllvorrichtung und Blasvorrichtung erreicht werden, dass ein Füllvorgang eines ersten, bereits hergestellten Behälters gleichzeitig mit dem Blasvorgang eines zweiten Behälters in einer zweiten Blasform stattfinden kann. Damit kann die Auslastung sowohl der Blasvorrichtung als auch der Füllvorrichtung erhöht werden, im Idealfall sogar beinahe verdoppelt werden, so dass auf diese Weise ein effizienteres Herstellen und Befüllen von Behältern beispielsweise in einer Getränkeabfüllanlage ermöglicht wird.

Mit anderen Worten wird es so ermöglicht, den Blasvorgang und den Füllvorgang räumlich sowie von der Taktzeit her zu entkoppeln, so dass diese Vorgänge im Wesentlichen unabhängig voneinander durchgeführt werden können und entsprechend eine Effizienzsteigerung erreicht werden kann.

Durch das Verfahren der Blasform von der Blasvorrichtung zu der Füllvorrichtung kann weiterhin erreicht werden, dass bei der Blasvorrichtung auch der Vorgang des Entformens, der ein hinreichend starkes Abkühlen des fertig geblasenen Behälters voraussetzt, vermieden werden kann. Der fertig geblasene Behälter kann entsprechend in der Blasform noch in einem relativ heißen Zustand zu der Füllvorrichtung transportiert werden, ohne dass die Formhaltigkeit darunter leidet, da er immer noch in der Blasform aufgenommen ist.

Weiterhin kann die Anzahl der benötigten Blasvorrichtungen und Füllvorrichtungen gegenüber dem Stand der Technik reduziert werden. Aus dem Stand der Technik ist bekannt, an jeder Blasform eine Blasvorrichtung und eine Füllvorrichtung vorzusehen. Durch die vorgeschlagene Vorrichtung können nun mittels einer einzigen Blasvorrichtung und einer einzigen Füllvorrichtung sämtliche Blasformen bearbeitet werden. Es können auf jeden Fall weniger Füllvorrichtungen und/oder Blasvorrichtungen vorhanden sein als Blasformen.

Besonders bevorzugt umfasst die Füllvorrichtung auch einen Verschließer. Entsprechend kann ein vollständiges Herstellen, Befüllen und Verschließen des Behälters erreicht werden, solange dieser sich noch in der Blasform befindet. Da der Behälter beim Herstellen und Befüllen noch vollständig in der Blasform aufgenommen ist und sich dadurch strukturelle Einschränkungen des Behälters nicht auswirken, können auch Behälter mit einer reduzierten Wanddicke hergestellt und befüllt werden und dann nach der Befüllung unter einem Überdruck verschlossen werden, um durch den Innendruck in dem Behälter eine Stabilität während des Transports zum Endnutzer zu erreichen.

In einer bevorzugten Ausbildung sind mindestens zwei Blasformen vorgesehen, wobei eine erste Blasform in der Blasvorrichtung zum Herstellen eines Behälters vorgesehen ist, während eine zweite Blasform in der Füllvorrichtung zum Befüllen, bevorzugt zum gleichzeitigen Befüllen, eines weiteren Behälters vorgesehen ist. Durch die Verwendung von mindestens zwei Blasformen kann die Effizienz des Füllvorgangs weiter verbessert werden.

Um ein besonders effizientes Aufnehmen eines erhitzten Preforms und ein besonders effizientes Entformen des hergestellten und mit dem Füllprodukt befüllten Behälters zu erreichen, kann die Blasform in Form von zwei Blasformhälften vorgesehen sein, die synchron zueinander von der Blasvorrichtung zur Füllvorrichtung verfahren werden. Durch die Verwendung der beiden Blasformhälften können die Blaskavitäten einfach geschlossen und geöffnet werden.

Eine druckdichte Verriegelung der beiden Blasformhälften wird bevorzugt über mindestens eine Verriegelungsvorrichtung bereitgestellt, mittels welcher die Blasformhälften während des Blasvorganges und während des Füllvorganges miteinander verriegelt werden können.

Besonders bevorzugt findet an der Füllvorrichtung ein Evakuieren des in der Blasform aufgenommenen, zu befüllenden Behälters statt, um entweder durch ein nachfolgendes Spülen mit einem definiert vorgegebenen Spülgas, beispielsweise CO₂, eine definierte Atmosphäre in dem zu befüllenden Behälter bereitzustellen, bevorzugt auch unter Überdruck, oder aber ein Füllen des Füllprodukts in den evakuierten Behälter zu ermöglichen.

Um ein Evakuieren des Behälters zu ermöglichen, ohne die Formhaltigkeit des Behälters zu kompromittieren, sind die Blasformhälften bevorzugt druckdicht gegeneinander abgedichtet, um das Bereitstellen eines Vakuums oder eines Unterdrucks in der Blaskavität zu ermöglichen. Besonders bevorzugt ist in der Blasform eine Unterdruckeinrichtung vorgesehen, welche es ermöglicht, einen Unterdruck zwischen der Blasform und dem darin aufgenommenen Behälter bereitzustellen. Durch das Bereitstellen des Unterdrucks zwischen Behälter beziehungsweise der Behälterwand und der Blasform wird die Behälterwand beziehungsweise der Behälter an die Wand der Blasform angesaugt, so dass auch bei einem Evakuieren des Innenraumes des Behälters die Behälterwände tatsächlich an der Wand der Blasform angelegt bleiben. Damit kann einer Verformung des Behälters beim Evakuieren des Behälterinnenraumes entgegengewirkt werden.

Durch das Füllen eines Füllprodukts in einen evakuierten Innenraum eines Behälters kann der Füllvorgang ebenfalls beschleunigt werden. Je nach Ausprägung des Unterdrucks im Behälterinnenraum kann ein schlagartiges Befüllen des Behälters mit dem unter Normaldruck oder Überdruck bereitgestellten Füllprodukts erreicht werden. Hierzu ist es jedoch notwendig, dass, um den Unterdruck im Behälterinnenraum zuverlässig halten zu können und entsprechend einer Deformation der Behälterwände entgegenzuwirken, ebenfalls ein Unterdruck zwischen Behälter beziehungsweise Behälterwand und Blasform beziehungsweise Blasformwand aufgebaut wird, um entsprechend den Behälter an die Blasformwand anzusaugen.

Eine besonders bevorzugte Ausbildung der Vorrichtung wird dadurch erreicht, dass die Blasform in zwei Hälften aufgeteilt wird, welche zwischen der Blasvorrichtung und der Füllvorrichtung miteinander verbunden sind, um die beim Blasvorgang notwendige Formhaltigkeit bereitzustellen sowie die aufgrund der Druckverhältnisse im Behälter beziehungsweise in der Blasform auftretenden Kräfte während des Blasvorganges sowie während des Füllvorganges aufzunehmen, aber zum Aufnehmen des Preforms vor dem Blasvorgang sowie zum Ausgeben des fertig befüllten Behälters voneinander entfernt werden, um eine entsprechende Lücke zwischen den Blasformhälften bereitzustellen, die ein Aufnehmen der Preforms und ein Entformen und Ausgeben der befüllten Behälter ermöglicht.

Die Bewegung der Blasform und insbesondere der vorgeschlagenen Blasformhälften ist zwischen der Blasvorrichtung und der Füllvorrichtung bevorzugt linear ausgebildet, um eine möglichst einfache und effiziente Trajektorie bereitzustellen.

Eine besonders effiziente Betätigung der Blasformhälften kann über einen Linearantrieb erreicht werden, mittels dessen die Blasformhälften bewegt werden können. Mittels des Linearantriebs können die Blasformhälften in unterschiedlichen Bereichen ihres Transports mit individuellen Geschwindigkeiten bewegt werden. Entsprechend kann jede Blasform, die aus synchron zueinander bewegten Blasformhälften ausgebildet wird, an der Blasvorrichtung und an der Füllvorrichtung im Prinzip für die jeweilige Prozessdauer angehalten werden und zwischen der Blasvorrichtung und der Füllvorrichtung hingegen schnell bewegt werden. Auf dem "Rückweg", nachdem der hergestellte und befüllte Behälter entformt und ausgegeben wurde und die Blasformhälften wieder an den Anfang zur Aufnahme des Preforms bewegt werden, können sich die Blasformhälften sehr schnell bewegen. Hier kann beispielsweise erreicht werden, dass nur eine Blasform mehr, als für den Takt notwendig, vorgesehen ist, die dann unmittelbar nach dem Entformen des Behälters im nächsten Takt wieder zur Aufnahme eines neuen Preforms bereitgestellt wird. Als besonders kompakte Ausbildung können drei Blasformen, eine Blasvorrichtung und eine Füllvorrichtung vorgesehen sein.

Der Linearantrieb ist besonders bevorzugt in Form eines Langstatormotors ausgebildet, bei dem jede Blasformhälfte mit jeweils einem oder mehreren Läufern auf dem Langstator verbunden ist, um auf diese Weise einen Linearantrieb für die jeweilige Blasformhälfte bereit zu stellen. Die Blasformhälfte kann auch durch einen sich auf dem Langstator bewegenden Läufer selbst ausgebildet sein.

Bevorzugt können die Blasformhälften zum Schließen der Blasform synchronisiert zusammengefügt werden, die Blasform dann geschlossen von der Blasvorrichtung zu der Füllvorrichtung bewegt werden und, nach dem die Blasform die Füllvorrichtung passiert hat, können die Blasformhälften zum Öffnen der Blasform wieder auseinandergeführt werden.

Auf diese Weise kann ein ausgeformter und befüllter Behälter in der Blasform hergestellt werden und dann aus der Blasform wieder entnommen werden.

In einer besonders bevorzugten Ausbildung kann an der Füllvorrichtung auch ein Verschließen des dann mit dem Füllprodukt befüllten Behälters vorgenommen werden. Dazu ist bevorzugt ein Verschließer vorgesehen. Entsprechend kann dann ein befüllter und verschlossener Behälter aus der Blasform entnommen werden.

Bevorzugt ist eine ortsfesteste Medienversorgung und/oder Steuerung vorgesehen und eine Medienleitung und/oder Datenverbindung einer Blasformhälfte ist über eine Kopplung, bevorzugt über einen Drehverteiler, mit der ortsfesten Medienversorgung und/oder der Steuerung verbunden.

Zu den von der ortsfesten Medienversorgung an die Blasformhälften übertragenen Medien können beispielsweise elektrische Energie, Kühlwasser, Temperierwasser, Temperieröl, Druckluft, Hydraulikmedium und/oder Unterdruck/Vakuum gehören. Es kann nur ein Medium oder aber mehrere Medien übertragen werden - je nach Anforderung des Blasprozesses.

Die ausgetauschten Daten können beispielsweise Informationen zur Position der jeweiligen Blasform oder Blasformhälfte, Informationen zur Temperatur der Blasform und/oder von deren Innenraum, Informationen zum Druck in der Blasform, Informationen zur Dichtheit der Blaskavität in der Blasform und ähnliche Informationen umfassen.

Die oben beschriebene Aufgabe wird auch durch ein Verfahren mit den Merkmalen des Anspruchs 11 gelöst. Vorteilhafte Weiterbildungen ergeben sich aus den Unteransprüchen.

Entsprechend wird ein fertig geblasener Behälter von einer Blasvorrichtung zu einer Füllvorrichtung in der Blasform transportiert und durch die Füllvorrichtung mit Füllprodukt befüllt. Auf diese Weise können die oben beschriebenen vorteilhaften Wirkungen erreicht werden.

Bevorzugt wird der fertig geblasene Behälter vor dem Befüllen mit dem Füllprodukt evakuiert und das Füllprodukt dann in den evakuierten Behälter eingefüllt. Es lässt sich auf diese Weise ein schlagartiges Befüllen des Behälters mit dem Füllprodukt erreichen. Damit lassen sich auch die Prozesszeiten des Blasens beziehungsweise des Streckblasens mit den Prozesszeiten des Füllens angleichen, so dass die Vorrichtung und das Verfahren besonders effizient gestaltet werden können.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Draufsicht auf eine Vorrichtung zum Befüllen eines Behälters mit einem Füllprodukt;
- Figur 2: eine weitere schematische Draufsicht auf die Vorrichtung mit schematisch dargestellter Blasvorrichtung und Füllvorrichtung;
- Figur 3: eine schematische Draufsicht auf die Transporttrajektorie einer Blasformhälfte in der Vorrichtung nach den Figuren 1 und 2;
- Figur 4: eine schematische Darstellung zweier Blasformhälften in einer beabstandeten Konfiguration;
- Figur 5: eine schematische Darstellung der Blasformhälften aus Figur 4 in einer aufeinander zu bewegten Konfiguration;
- Figur 6: eine schematische Darstellung der Blasformhälften aus Figuren 4 und 5 in einer miteinander verriegelten Konfiguration;
- Figur 7: eine schematische Darstellung der Blasformhälften aus den Figuren 4-6 in Kombination mit einem Blaskissen zur Vermeidung eines Zwischenspalts;
- Figur 8: eine schematische Draufsicht auf die Vorrichtung der Figuren 1 und 2 zur Darstellung einer Medienzuführung mittels eines Drehverteilers.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

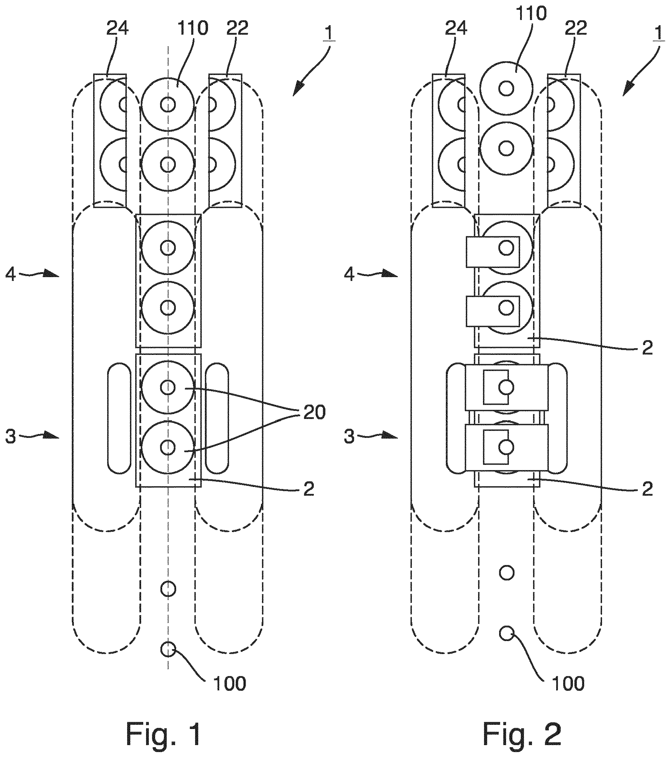

Figur 1 zeigt schematisch eine Draufsicht auf eine Vorrichtung 1 zum Befüllen eines Behälters mit einem Füllprodukt. Hierzu sind im gezeigten Ausführungsbeispiel drei Blasformen 2 vorgesehen, welche in dem gezeigten Ausführungsbeispiel in Form von Blasformen 2 vorgesehen sind, welche jeweils zwei Blaskavitäten 20 aufweisen. Mit anderen Worten können in jeder der vorgeschlagenen Blasformen 2 zwei Behälter gleichzeitig hergestellt werden.

Die Blasformen 2 sind weiterhin in Form von zwei Blasformhälften 22, 24 vorgesehen, welche zum Ausbilden der eigentlichen Blaskavitäten 20 miteinander in Kontakt gebracht werden, und zum Aufnehmen von Preforms 100 sowie zum Ausgeben fertig hergestellter Behälter 110 voneinander fortbewegt werden können, um die Behälter 110 zu entformen.

Die Vorrichtung 1 ermöglicht ein Zuführen von vorgeheizten Preforms 100 zur Aufnahme in eine Blasform 2. Die Heizvorrichtung zum Vorheizen der Preforms 100 ist in den Figuren nicht gezeigt, aber prinzipiell bekannt.

Die in der Blasform 2 aufgenommenen und erwärmten Preforms 100 werden dann gemeinsam mit der Blasform 2 zu einer Blasvorrichtung 3 transportiert. In der Blasvorrichtung 3 wird auf im Wesentlichen bekannte Weise der vorerhitzte Preform 100 durch das Beaufschlagen des Innenraums des Preforms mit einem Blasmedium, beispielsweise Druckluft oder unter Druck stehendem CO₂, auf die durch die Kavität 20 der Blasform 2 vorgegebene Kontur geblasen. In der Blasvorrichtung 3 kann neben dem Beaufschlagen der erwärmten Preforms 100 mit dem Blasmedium auch der Einsatz von Streckstangen vorgesehen sein, um ein mechanisches Vorrecken beziehungsweise Strecken des erwärmten Preforms 100 vor oder während des Beaufschlagens mit dem Blasmedium zu ermöglichen.

Nachdem der Behälter in der Blasvorrichtung 3 fertig hergestellt wurde, wird die Blasform 2 von der Blasvorrichtung 3 getrennt und zu einer Füllvorrichtung 4 verfahren. Dabei ist der mittels der Blasvorrichtung 3 fertig geblasene Behälter immer noch in der Blaskavität 20 der Blasform 2 aufgenommen. Mit anderen Worten findet ein Entformen des fertig geblasenen Behälters vor dem Transport zu der Füllvorrichtung 4 nicht statt. Vielmehr wird die Blasform 2 mit dem darin aufgenommenen fertig geblasenen Behälter von der Blasvorrichtung 3 zur Füllvorrichtung 4 verfahren. Die Blasvorrichtung 3 und die Füllvorrichtung 4 sind entsprechend beabstandet voneinander angeordnet, so dass die Blasform 2 zunächst mit der Blasvorrichtung 3 wechselwirkt und erst nach dem Verfahren zu der Füllvorrichtung 4 mit der Füllvorrichtung 4 wechselwirkt. Mit anderen Worten kann die Füllvorrichtung 4 nicht in der gleichen Relativposition der Blasform 2 mit der Blasvorrichtung 3 verbunden werden.

In dem in Figuren 1 und 2 gezeigten Ausführungsbeispiel wird die Blasform 2 dabei linear zwischen der Blasvorrichtung 3 und der Füllvorrichtung 4 verfahren. Es ist jedoch nicht notwendig, dass hier ein lineares Verfahren stattfindet, es können auch beliebige andere Trajektorien vorgesehen sein, beispielsweise das Bewegen der Blasform 2 auf einem Kreisabschnitt beziehungsweise einer Kreisbahn oder einer anderen beliebigen Bahn. Durch das Bewegen der Blasform 2 von der Blasvorrichtung 3 zur Füllvorrichtung 4 wird entsprechend erreicht, dass direkt nach dem Fertigblasen des Behälters in der Kavität 20 der Blasform 2, bevorzugt nach dem Entlasten der fertig geblasenen Behälter von dem Druck des Blasmediums, die Blasform 2 sofort von der Blasvorrichtung 3 getrennt und weitertransportiert wird, so dass die Blasvorrichtung 3 entsprechend gleich mit einer nachfolgenden Blasform 2 in Wechselwirkung gebracht werden kann, so dass der nächste Behälter fertig geblasen werden kann.

In der Blasform 2, welche von der Blasvorrichtung 3 zur Füllvorrichtung 4 transportiert wurde, ist entsprechend der fertig geblasene, aber noch nicht befüllte Behälter aufgenommen, der gemeinsam mit der Blasform 2 transportiert wird. An der Füllvorrichtung 4 kann nun ein Füllprodukt in den noch in der Blasform 2 aufgenommenen Behälter eingebracht werden. Auf diese Weise ist es beispielsweise nicht notwendig, ein Abkühlen des fertig geblasenen Behälters abzuwarten, bevor ein Entformen des Behälters stattfinden kann, um ein formhaltiges Befüllen zu ermöglichen. Damit kann der Blasvorgang, an den sich herkömmlicherweise nach Ablauf einer bestimmten Abkühlzeit ein Entformvorgang anschloss, verkürzt werden, da auf den Entformvorgang verzichtet werden kann. Weiterhin ist es möglich, dass eine Verformung des möglicherweise noch warmen Behälters durch das Einbringen des Füllprodukts in der Füllvorrichtung 4 dadurch verhindert wird, dass sich der Behälter noch in der Blasform 2 befindet.

Mit anderen Worten können die Blasformhälften 22, 24 zum Schließen der Blasform 2 mittels des Linearantriebs synchronisiert zusammengefügt werden. Dann kann die Blasform 2 geschlossen von der Blasvorrichtung 3 zu der Füllvorrichtung 4 bewegt werden, um auf diese Weise zunächst die an der Blasvorrichtung 3 den zu befüllenden Behälter herzustellen und dann den fertig ausgeformte Behälter in der geschlossenen Blasform 2 zu der Füllvorrichtung 4 zu bewegen. An der Füllvorrichtung 4 kann der sich noch in der Blasform 2 befindliche, bereits ausgeformte Behälter dann mit dem Füllprodukt befüllt werden. Nach dem Passieren der Füllvorrichtung 4 können die Blasformhälften 22, 24 dann zum Öffnen der Blasform 2 mittels des Linearantriebs wieder auseinandergeführt werden. Auf diese Weise wird die Blasform 2 geöffnet und der fertig ausgeformte und mit dem Füllprodukt befüllte Behälter kann aus der Blasform 2 entnommen werden.

In einer besonders bevorzugten Variante wird der befüllte Behälter an der Füllvorrichtung 4 mittels eines Verschließers auch mit einem Verschluss versehen, wobei sich der dann befüllte Behälter dann immer noch in der Blasform 2 befindet. Damit kann entsprechend beim Öffnen der Blasform 2 ein fertig ausgeformter, mit dem Füllprodukt befüllter und mit einem Behälterverschluss verschlossener Behälter der Blasform 2 entnommen werden.

Es ist weiterhin möglich, den in der Blasform 2 aufgenommenen Behälter vor dem eigentlichen Beaufschlagen mit dem Füllprodukt zu evakuieren, um beispielsweise durch das nachfolgende Einbringen eines Spülgases beziehungsweise eines Vorspanngases eine definierte Atmosphäre im Behälter bereitzustellen, welche beispielsweise die Haltbarkeit des Füllprodukts positiv beeinflusst. Weiterhin ist es auch möglich, durch ein Evakuieren des Behälters und ein direkt nachfolgendes Einfüllen des Füllprodukts in den dann unter einem Unterdruck stehenden Behälter ein schnelleres Abfüllen des Füllprodukts zu erreichen. Insbesondere kann beim Einfüllen eines Füllprodukts in einen evakuierten Behälter, wobei das Füllprodukt unter Umgebungsdruck beziehungsweise unter Überdruck steht, ein quasi schlagartiges Befüllen des Behälters erreicht werden, so dass der Füllvorgang insgesamt deutlich beschleunigt wird.

Um ein Evakuieren des in der Blasform 2 aufgenommenen Behälters zu ermöglichen, wird vorteilhaftweise eine Unterdruckvorrichtung vorgesehen, welche einen Unterdruck zwischen der Blasform 2, insbesondere zwischen der Kavität 20 und dem in der Kavität 20 aufgenommenen Behälter beziehungsweise dessen Behälterwand, herstellen kann. Entsprechend wird der in der Kavität 20 aufgenommene Behälter beziehungsweise dessen Behälterwand quasi an die Wand der Kavität angesaugt, so dass ein auf Unterdruck bringen beziehungsweise Evakuieren des Innenraumes des in der Kavität 20 aufgenommenen, fertig ausgeformten Behälters möglich wird, ohne dass die Wände des Behälters durch das Aufbringen des Unterdrucks im Innenraum des Behälters verformt werden. Der in dem Zwischenraum zwischen der Kavität 20 beziehungsweise den Wänden der Kavität 20 der Blasform 2 und dem in der Kavität 20 aufgenommenen Behälter angelegte Unterdruck wird dabei so ausgewählt, dass die Behälterwände an den Wänden der Kavität 20 zuverlässig angelegt bleiben, auch wenn das Vakuum beziehungsweise der Unterdruck in dem Innenraum des Behälters bereitgestellt wird.

Entsprechend kann nicht nur der Vorgang des Herstellens des Behälters zeitlich verkürzt werden, da das Abkühlen des Behälters vor einem Entformen nicht abgewartet werden muss, sondern es kann auch der Befüllvorgang verkürzt werden, da keine Rücksicht genommen werden muss auf die mechanische Stabilität des Behälters und entsprechend mit hohen Drücken befüllt werden kann beziehungsweise sogar in einen unter Unterdruck stehenden Behälter gefüllt werden kann, ohne dass der Kunststoffbehälter deformiert wird. Damit kann der gesamte Vorgang des Herstellens des zu befüllenden Behälters sowie des Befüllens des zu befüllenden Behälters beschleunigt werden.

Weiterhin kann der Blasvorrichtung 3 durch das Verfahren der Blasformen 2 von der Blasvorrichtung zu der Füllvorrichtung im Takt stets ein neuer, zu blasender Preform zugeführt werden, so dass die Blasvorrichtung nicht auf das Ende eines Füllvorganges warten muss. Mit anderen Worten kann das Blasen und das Füllen von Behältern gleichzeitig stattfinden, wohingegen im Stand der Technik stets ein Abwarten der Blasvorrichtung auf die Füllvorrichtung beziehungsweise der Füllvorrichtung auf die Blasvorrichtung vorgegeben war. Hierdurch lässt sich die gesamte Vorrichtung kompakter gestalten und entsprechend die Anzahl der Blasvorrichtungen und Füllvorrichtungen sowie die Anzahl der Blasformen 2 bei gleicher Leistung insgesamt reduziert werden.

Weiterhin ist in der in den Figuren 1 und 2 vorgeschlagenen Vorrichtung zu erkennen, dass lediglich eine einzige Blasvorrichtung und eine einzige Füllvorrichtung vorgesehen sind und nicht, so wie aus dem Stand der Technik bekannt, für jede Blasform eine eigene Blasvorrichtung sowie eine eigene Füllvorrichtung vorgehalten werden. Damit kann die gesamte Anlage ebenfalls effizienter und kostengünstiger aufgebaut werden, da auf die Bereitstellung von einer Vielzahl von Blasvorrichtungen und Füllvorrichtungen verzichtet werden kann.

Aus den Figuren 1 und 2 ist weiterhin zu erkennen, dass die einzelnen Blasformen 2 in Form von Blasformhälften 22, 24 vorgesehen sind, welche entlang der Bewegungsrichtung von der Blasvorrichtung 3 zur Füllvorrichtung 4 parallel zueinander, in einem aneinander angepressten Zustand transportiert werden. Die Blasformhälften 22, 24 sind in dieser Ausführungsform auf jeweils linearen Trajektorien geführt, welche ein "endloses" Zuführen von Blasformhälften ermöglichen. Nach dem Ende des Befüllvorganges bewegen sich die Blasformhälften 22, 24 auf ihren Trajektorien nach außen und werden entsprechend außerhalb der eigentlichen Fülllinie zurückgeführt, um dann zu Beginn der Fülllinie wiederum unter Aufnahme der vorgeheizten Preforms 100 zusammengeführt zu werden, um dann den Preform aufzunehmen und zusammen mit dem aufgenommenen Preform zur Blasvorrichtung 3 bewegt zu werden.

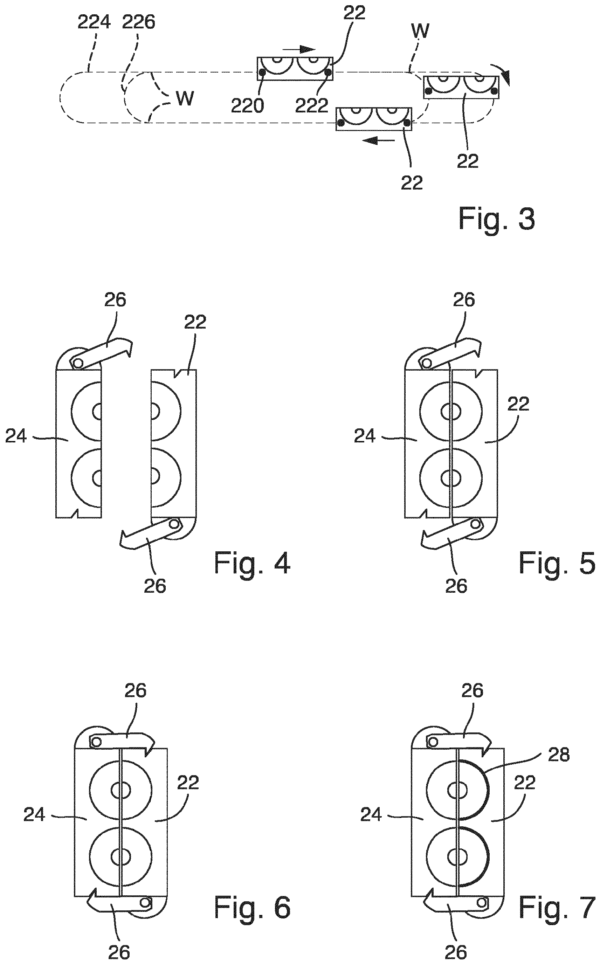

Diese Trajektorien der Blasformhälften sind in Figur 3 noch einmal gezeigt. Entsprechend weist eine schematisch gezeigte Blasformhälfte 22 zwei Pucks 220, 222 auf, welche entsprechend in zwei Führungsschienen 224, 226 geführt werden, derart, dass eine Parallelverschiebung der Blasformhälften 22 so vorgesehen ist, dass die gewünschte Führung der Blasformhälften 22 erreicht wird. Die Blasformhälften 22 können dabei beispielsweise auch über einen langen Statorlinearmotor angetrieben werden, so dass jede Blasformhälfte 22 unabhängig von den anderen Blasformhälften 22 und individuell entlang der Führungsschienen 224, 226 geführt werden kann.

Eine Vakuumglocke beziehungsweise eine Druckglocke über dem Mundstück des Preforms an der Füllvorrichtung 4 stellt bevorzugt den nötigen Unterdruck beziehungsweise Überdruck in dem fertig hergestellten Behälter, dessen Kopfraum sowie den darüber angeordneten Druckraum bereit, um entsprechend ein schnelles Füllen zu ermöglichen. Der durch diese Vakuumglocke beziehungsweise Druckglocke bereitgestellte Druckraum kann sehr klein ausgeführt werden, da er nur jeweils die Mündung und den Kopfraum des Behälters aufnehmen muss und gegen die Blasform 2 abgedichtet sein muss.

In der Füllvorrichtung 4 ist besonders bevorzugt weiterhin auch ein Verschließer integriert, mittels welchem der Behälter nach erfolgtem Befüllen verschlossen werden kann. Die Blasform 2 kann hier als Drehmomentstütze für den jeweiligen Verschließer dienen. Das Drehmoment kann dabei entweder über die Haftreibung der Behälterwände an der Kavität beziehungsweise den Wänden der Kavität 20 der Blasform 2 bereitgestellt werden, oder durch das zusätzliche Bereitstellen von Formschlusselementen, wie beispielsweise Spikes, welche unter einem Tragring eines Preforms angeordnet sind, und welche entsprechend beim Verschließvorgang das Drehmoment des Verschließers aufnehmen.

In dem in Figur 3 gezeigten System wird jede Blasformhälfte 22 von zwei Pucks 220, 222 angetrieben und durchfährt die Anlage unabhängig von ihrer Schwesterblasformhälfte und unabhängig von den anderen Formen. Entsprechend können für die Blasformhälften 22 unterschiedliche Geschwindigkeiten, jeweils auf dem Produktionsweg und auf dem Rückweg, bereitgestellt werden. Es können sich auch unterschiedliche Weglängen ergeben, wenn beispielsweise die Bahn aus baulichen Gründen auf der einen Seite länger ist, als auf der anderen Seite des Rückwegs. Die unterschiedlichen Weglängen können dann durch unterschiedliche Geschwindigkeiten der beiden Blasformhälften 22, 24 entlang des Rückwegs ausgeglichen werden.

In einer Alternative kann jede Blasformhälfte 22, 24 jeweils synchron zu ihrer Schwesterblasformhälfte die Anlage durchfahren, aber unabhängig von den anderen Blasformhälften. Dies ist insbesondere bei einer im Wesentlichen identischen und nur gespiegelten Ausbildung des jeweiligen Produktionswegs und Rückwegs möglich.

Eine Weiche W ist vorgesehen, um die Fahrt der jeweiligen Blasformhälften 22 ohne Rotation der Blasformhälften bereitzustellen. Durch die Bereitstellung individueller Geschwindigkeiten für jede Blasformhälfte 22 kann die Anzahl der benötigten Blasformhälften 22 reduziert werden, da auf dem "Rückweg", auf dem die Blasformhälfte 22 wieder in die Ausgangsposition transportiert wird, eine höhere Geschwindigkeit gefahren werden kann, als in dem produktiven Teil der Vorrichtung, in dem der Preform aufgenommen wird, die Blasform geschlossen wird, in der Blasform an der Blasvorrichtung das Herstellen des zu befüllenden Behälters vorgenommen wird, dann der hergestellte Behälter in der Füllvorrichtung befüllt und unter Umständen auch verschlossen wird und schließlich der befüllte Behälter entformt wird. Auf dem Rückweg können die Blasformhälften schneller bewegt werden. In einer besonders bevorzugten Ausführungsform ist nur eine einzige zusätzliche Blasform vorgesehen, die dann auf dem Rückweg so schnell bewegt wird, dass sie vom Entformen bis zum erneuten Aufnehmen eines Preforms nur eine Taktzeit benötigt.

In den Figuren 4 bis 7 sind Blasformhälften 22, 24 gezeigt, welche in unterschiedlichen Zuständen bereitgestellt sind. Die Blasformhälften 22, 24 weisen dabei Verriegelungsvorrichtungen 26 auf, mittels welchen die Blasformhälften 22, 24 gegeneinander verriegelt werden können, um den Drücken beim Blasvorgang besser standhalten zu können.

Während des Blasvorganges muss die Blasform 2 hohe Kräfte aufnehmen, welche hauptsächlich durch die Druckkräfte der Druckluft, welche zum Ausformen des Preforms vorgesehen ist, aufgebracht werden. Um zu erreichen, dass die Blasformhälften 22, 24 während des Blasvorganges zuverlässig gegeneinander verriegelt sind, sind mechanische Verriegelungsvorrichtungen 26 vorgesehen, welche wie in Figuren 5 und 6 gezeigt, nach einem Zusammenführen der Blasformhälften 22, 24 in die jeweils andere Blasformhälfte eingreifen und mit dieser verriegeln. Entsprechend kann eine mechanische Verriegelung der Blasformhälften 22, 24 gegeneinander erreicht werden, während die Blasformhälften sich in der Blasvorrichtung befinden.

Um ein möglicherweise vorliegendes Spiel der Verriegelungsvorrichtung 26 auszugleichen, kann weiterhin ein Beaufschlagen eines Blaskissens 28 mit Druckluft vorgesehen sein, welches beispielsweise schematisch in Figur 7 angedeutet ist. Das Blaskissen 28 sorgt dafür, dass die Formhälften der Kavitäten 20, welche in der Blasform 2 aufgenommen sind, so gegeneinander angepresst werden, dass durch die Beaufschlagung des Blaskissens 28 mit Überdruck eine spaltfreie Kavität bereitgestellt wird, welche entsprechend ein zuverlässiges und hoch qualitatives Ausformen von Behältern ermöglicht.

Um ein Aufbringen eines Unterdrucks zwischen der Kavität 20 beziehungsweise der Wandung der Kavität 20 und dem in der Kavität aufgenommenen Behälter für den Blasvorgang zu ermöglichen, kann vorgesehen sein, dass die Blasformhälften 22, 24 mittels einer umlaufenden Dichtung gegenüber der Umgebung abgedichtet sind. Entsprechend wird der zu evakuierende Raum nach außen hin abgeschlossen. Auch in diesem Zusammenhang ist die mittels der Verriegelungsvorrichtung 26 vorgesehene Verriegelung der beiden Blasformhälften 22, 24 gegeneinander vorteilhaft, da auf diese Weise auch die vorgeschlagene Abdichtung zuverlässig bereitgestellt werden kann. Das Vakuum kann dann beispielsweise über einen von oben auf die Blasform aufgebrachten Druckraum beziehungsweise Stutzen sowohl den Innenraum des Behälters als auch den Zwischenraum zwischen Behälter und Kavität absaugen und entsprechend im Innenraum des Behälters sowie auf dessen Außenseite gleiche beziehungsweise quasi gleiche Druckverhältnisse bereitstellen, um ein Verformen des Behälters aufgrund des Bereitstellens eines Unterdruckes innerhalb des Behälters zu verhindern.

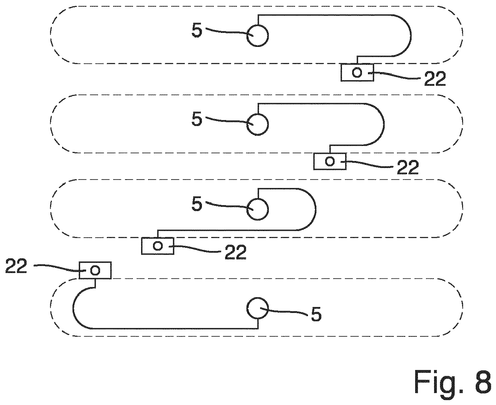

Um eine Kühlung der Blasformhälften 22, 24 zu ermöglichen, ist weiterhin ein Mediendrehverteiler 5 vorgesehen, welcher, wie in Figur 8 gezeigt, über eine Schleppkette ein Zuführen und Abführen von Medien von dem Mediendrehverteiler 5 an die jeweilige Blasformhälfte 22 während des gesamten Umlaufes der Blasformhälfte 22 ermöglicht. Dabei wird jeder Blasformhälfte 22, 24 bevorzugt ein Kühlmedium zugeführt und dieses nach Durchfließen der entsprechenden Kühlkanäle wieder abgeführt, um eine entsprechende Kühlung der Blasformen 2 bereitzustellen.

Mit anderen Worten kann eine Blasformhälfte 22 mit einer ortsfesten Medienversorgung über eine Kopplung in Form des Drehverteilers 5 gekoppelt sein, um eine dauerhafte Versorgung der Blasformhälfte 22 mit Medien zu erreichen. Diese Versorgung mit Medien ist natürlich für jede Blasformhälfte 22, 24 möglich, um entsprechend die für den Blasvorgang notwendigen Medien der aus den Blasformhälften 22, 24 zusammengesetzten Blasform 2 zuzuführen. Zu den von der ortsfesten Medienversorgung an die Blasformhälften 22, 24 übertragenen Medien können beispielsweise elektrische Energie, Kühlwasser, Temperierwasser, Temperieröl, Druckluft, Hydraulikmedium und/oder Unterdruck/Vakuum gehören. Es kann nur ein Medium oder aber mehrere Medien übertragen werden - je nach Anforderung.

Neben Medien, die den Blasformen 2 zugeführt werden, können über eine entsprechende Datenverbindung, die mit einer ortsfesten Steuerung gekoppelt ist, beispielsweise ebenfalls über einen Drehverteiler 5 - beispielsweise über einen Schleifring - Daten mit der jeweiligen Blasform 2 beziehungsweise Blasformhälfte 22, 24 ausgetauscht werden. Die hierbei ausgetauschten Daten können beispielsweise Informationen zur Position der jeweiligen Blasform 2 oder Blasformhälfte 22, 24, Informationen zur Temperatur der Blasform 2 und/oder in deren Innenraum, Informationen zum Druck in der Blasform 2, Informationen zur Dichtheit der Blaskavität in der Blasform 2 und ähnliche Informationen umfassen.

Die Blasform 2 läuft bevorzugt getaktet entlang der Trajektorie. Entsprechend wird zunächst in einem ersten Taktschritt ein Aufnehmen der vorgeheizten Preforms 100 in die Blasformhälften 22, 24 erreicht. In einem zweiten Taktschritt werden die in der Blasform 2 aufgenommenen Preforms 100 zu der Blasvorrichtung 3 transportiert. Dort wird der Blasvorgang durchgeführt und entsprechend der Behälter erzeugt. Dann wird die Blasform 2 mit dem fertig hergestellten Behälter in einem weiteren Taktschritt an die Füllvorrichtung 4 geführt. In der Füllvorrichtung 4 wird der Behälter mit dem Füllprodukt beaufschlagt, eventuell vorher evakuiert und/oder mit einem Spülgas oder Vorspanngas beaufschlagt, und bevorzugt auch verschlossen. In einem weiteren Taktschritt wird die Blasform 2 dann an die Ausgabeposition bewegt, in welcher die Blasformhälften 22, 24 auseinander bewegt werden, derart, dass dann der fertig befüllte Behälter 110 ausgegeben werden kann.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 1: Vorrichtung zum Befüllen eines Behälters mit einem Füllprodukt
- 2: Blasform
- 20: Kavität
- 22: Blasformhälfte
- 24: Blasformhälfte
- 26: Verriegelungsvorrichtung
- 220, 222: Puck
- 224, 226: Schiene
- 3: Blasvorrichtung
- 4: Füllvorrichtung
- 5: Drehverteiler
- 100: Preform
- 110: fertig befüllter Behälter

## Patentansprüche

1. Vorrichtung (1) zum Herstellen eines mit einem Füllprodukt befüllten Behälters (110), umfassend eine Blasform (2) zum Herstellen des zu befüllenden Behälters durch Blasformen eines Preforms in einer Blasvorrichtung (3), und eine Füllvorrichtung (4) zum Befüllen des blasgeformten und sich noch in der Blasform (2) befindlichen zu befüllenden Behälters mit dem Füllprodukt,
**dadurch gekennzeichnet, dass**
die Blasform (2) von der Blasvorrichtung (3) zu der Füllvorrichtung (4) verfahrbar ist.

2. Vorrichtung (1) gemäß Anspruch 1, **dadurch gekennzeichnet, dass** die Füllvorrichtung (4) weiterhin einen Verschließer umfasst.

3. Vorrichtung (1) gemäß Anspruch 1 oder 2, **dadurch gekennzeichnet, dass** mindestens zwei Blasformen (2) vorgesehen sind, wobei eine erste Blasform in der Blasvorrichtung (3) zum Herstellen eines Behälters vorgesehen ist, während eine zweite Blasform (2) in der Füllvorrichtung (4) zum Befüllen, bevorzugt zum gleichzeitigen Befüllen, eines weiteren Behälters vorgesehen ist.

4. Vorrichtung (1) gemäß einem der vorstehenden Ansprüche, **dadurch gekennzeichnet, dass** die Blasform (2) in Form von zwei Blasformhälften (22, 24) vorgesehen ist, die synchron zueinander von der Blasvorrichtung (3) zur Füllvorrichtung (4) verfahren werden.

5. Vorrichtung (1) gemäß einem der vorstehenden Ansprüche, **dadurch gekennzeichnet, dass** die Blasformhälften (22, 24) über mindestens eine Verriegelungsvorrichtung (26) verfügen, mittels welcher die Blasformhälften (22, 24) während des Blasvorganges und während des Füllvorganges miteinander verriegelt werden können.

6. Vorrichtung (1) gemäß einem der vorstehenden Ansprüche, **dadurch gekennzeichnet, dass** die Blasformhälften (22, 24) druckdicht gegeneinander abgedichtet sind, um das Bereitstellen eines Vakuums in einer Blaskavität (20) zu ermöglichen.

7. Vorrichtung (1) gemäß einem der vorstehenden Ansprüche, **dadurch gekennzeichnet, dass** die Blasformhälften (22, 24) über einen Linearantrieb bewegt werden können, wobei der Linearantrieb bevorzugt als Langstatormotor ausgebildet ist, wobei jede Blasformhälfte (22, 24) mit einem Läufer des Langstatormotors verbunden ist oder durch einen Läufer ausgebildet ist.

8. Vorrichtung (1) gemäß einem der vorstehenden Ansprüche, **dadurch gekennzeichnet, dass** die Blasformhälften (22, 24) zum Schließen der Blasform (2) synchronisiert zusammengefügt werden können, dann geschlossen von der Blasvorrichtung (3) zu der Füllvorrichtung (4) bewegt werden können, und nach dem Passieren der Füllvorrichtung (4) zum Öffnen der Blasform (2) auseinandergeführt werden können.

9. Vorrichtung (1) gemäß einem der vorstehenden Ansprüche, **dadurch gekennzeichnet, dass** eine Unterdruckvorrichtung vorgesehen ist, mittels welcher ein Unterdruck in einem Zwischenraum zwischen dem fertig geblasenen Behälter und der Blasform (2) an der Füllvorrichtung (4) bereitgestellt werden kann.

10. Vorrichtung (1) gemäß einem der vorstehenden Ansprüche, **dadurch gekennzeichnet, dass** eine ortsfesteste Medienversorgung und/oder Steuerung vorgesehen ist und eine Medienleitung und/oder Datenverbindung einer Blasformhälfte (22, 24) über eine Kopplung, bevorzugt über einen Drehverteiler (5), mit der ortsfesten Medienversorgung und/oder Steuerung verbunden ist.

11. Verfahren zum Befüllen eines Behälters mit einem Füllprodukt,
**dadurch gekennzeichnet, dass**
ein fertig geblasener Behälter von einer Blasvorrichtung (3) zu einer Füllvorrichtung (4) in der Blasform transportiert wird und durch die Füllvorrichtung (4) mit Füllprodukt befüllt wird.

12. Verfahren gemäß Anspruch 11, **dadurch gekennzeichnet, dass** der fertig geblasene Behälter vor dem Befüllen mit dem Füllprodukt evakuiert wird und das Füllprodukt in den evakuierten Behälter eingefüllt wird.
